# EUROPEAN PATENT SPECIFICATION

(11) **EP 1 459 638 B1**
(45) Date of publication and mention of the grant of the patent: **06.09.2006**
(21) Application number: 04002282.4
(22) Date of filing: 03.02.2004
(51) Int. Cl.: A43B 13/18, A43B 17/02, B62J 1/18, B29D 31/00, B68G 7/00, B29D 31/515, A47C 31/10, A47C 27/16, A47G 9/00, A47C 27/08

(54) **Cushioning member having a wavy outline**
Polsterteil mit wellenförmigem Umriss
Elément amortisseur à contour ondulé

(30) Priority: 04.03.2003 IT pn20030018
(43) Date of publication of application: 22.09.2004
(73) Proprietor: Gilda Design di Vania Cadamuro, 36061 Bassano del Grappa, Vicenza (IT)
(72) Inventor: Cadamuro, Vania, 36061 Bassano del Grappa Vicenza (IT); Cadamuro, Roberto, 36061 Bassano del Grappa Vicenza (IT)
(74) Representative: Giugni, Valter

(56) References cited:
- WO-A-81/01234
- DE-A- 4 122 557
- GB-A- 769 945
- IT-A- 1 314 986
- US-A- 5 008 141
- US-A- 5 337 492
- US-A1- 2001 007 177
- US-B1- 6 675 500

## Description

The present invention refers to a cushioning member having an undulating, i.e. wavy conformation for supporting one or more parts of a human body on a resting surface thereof. A cushioning member of such a kind may for instance be used in footwear articles, chairs, vehicle seats, saddleries and upholstering shops in general, furniture accessories and fittings such as chairs, mattresses, pillows and the like, leisure products and items such as inflatable mattresses, pads, pillows and the like, and anyway in any application in which it is advantageous to provide a cushioned support in view of making it more comfortable for one or more parts of the body to rest thereupon.

The Italian Patent IT 1314 986 published in the name of the Applicant, describes a cushioning footwear sole comprising a plurality of cushioning modules provided in a juxtaposed arrangement in the longitudinal direction. Each one of such modules consists of a thread-like element made of a high-strength and high-rigidity material and bent in such a manner as to form a sequence of eyelets lying on the plane that passes along the longitudinal axis of the module and is normal to the ground plane, in a concordantly inclined manner, so that each such eyelet, following the sole impinging against the ground, will bend, i.e. deflect with such a pliability, i.e. yieldingness as allowed for by the length thereof, and tends then to regain, under an immediate spring-back effect, its non-deformed condition, substantially according to a damped aperiodic harmonic motion mode. The greater or smaller extent of pliability, or yieldingness, further depends on the smaller or greater density with which the modules are arranged transversally.

Although it proves particularly advantageous, the technical approach described above, however, turns out as being rather complex from a production point of view: as a matter of fact, the various modules are manufactured by means of an extrusion process using a mould that has a shape matching the longitudinal section of the modules themselves: the so obtained semi-finished product is formed by an undulated, i.e. corrugated plate, from which the individual modules are then cut off. In addition, assembling the individual modules together involves each single module, which is generally rectilinear in its cut-off state, being first of all brought into shape manually, and the whole assembly being then secured in a pre-determined position so as to obtain the final shape for application to the sole. The various modules are fastened by sewing them directly on to the sole or through proper hook-on members that act as spacers. It may therefore be readily appreciated that the process needed to produce and assemble the individual modules is necessarily quite a long and complex one, owing to its including a number of operational steps involving considerably high costs to carry them out.

Furthermore, the modules shall have differing lengths and conformations, depending on both the final shape of the assembly that has to be obtained and the different sizes of the shoes, boots or whichever other products that have to be manufactured therewith. This entails the need for a considerable number of moulds to be provided and used to comply with the whole production variety, and this of course entrains quite considerable costs with it.

A further limitation imposed by this technical approach is connected with the difficulties for the assemblies formed by the individual modules to be given shapes that correspond exactly with the shape of the component part which they are to be associated to (i.e. the soles in the particular case being considered), considering the limited ability of modules constituted by rectilinear thread-like elements to be brought into a desired shape, i.e. to allow for any wide extent of mouldability into shape.

It therefore is the object of the present invention to provide a cushioning member having an undulating, i.e. wavy conformation, which is particularly advantageous not only from a functional point of view, but also from a production-related one.

Within this general object, it is a purpose of the present invention to provide a cushioning member of the above-indicated kind, which is capable of being obtained, i.e. produced both easily and rapidly, thereby enabling a greater productivity and a higher efficiency to be achieved, as accompanied by a sensible reduction in production and assembly costs and related time requirements.

Still another purpose of the present invention is to provide a cushioning member of the above-indicated kind, which is able to be given the most varied final shapes, thereby allowing the most suitable shape to be defined with a wide degree of freedom for any and each different application which it may be intended for.

Finally, an equally important purpose of the present invention is to provide a cushioning member of the above-indicated kind, which is capable of being produced competitively from a cost-related point of view, using generally known tools and machines.

According to the present invention, these aims and advantages, along with further ones that will emerge from the following description, are reached in a cushioning member with an undulating structure, which incorporates the features and characteristics as recited in the appended claim 1.

Features and advantages of the present invention will anyway be more readily understood from the description of some preferred, although not sole embodiments that is given below by way of non-limiting example with reference to the accompanying drawings, in which:
- Figure 1 is a perspective view of a cushioning member according to the present invention, intended for use in footwear applications;
- Figure 2 is a plan view of the cushioning member shown in Figure 1;
- Figure 3 is a side elevational view of the cushioning member shown in Figure 1;
- Figure 4 is a side elevational view of a detail of the cushioning member;
- Figure 5 is a side cross-sectional view of a footwear item incorporating a cushioning member according to the present invention;
- Figure 6 is a plan view, similar to the one appearing in Figure2, of a second embodiment of the cushioning member according to the present invention;
- Figures 7 and 8 are side elevational views of the cushioning member shown in Figure 6 and a detail thereof, respectively;
- Figure 9 is a side cross-sectional view of a bicycle seat incorporating a cushioning member according to the present invention;
- Figure 10 is a plan cross-sectional view of the bicycle seat shown in Figure 9;
- Figure 11 is a view of an arm brace or guard incorporating one or more cushioning members according to the present invention;
- Figure 12 is a view of a leg guard incorporating a cushioning member according to the present invention;
- Figure 13 is a side cross-sectional view of a chair incorporating a plurality of cushioning members according to the present invention;
- Figure 14 is a front view of the chair shown in Figure 13;
- Figure 15 is a plan view of the seat of the chair shown in Figure 13.

With reference to the above-noted Figures, the reference numeral 1 is used there to generally indicate a cushioning member comprising a plurality of elastically deformable bands 2 having a wavy, i.e. undulating structure, so as described in the afore mentioned Italian Patent IT 1314 986 which is assigned to the assignee of the present invention. These bands are provided in a juxtaposed arrangement relative to each other according to a substantially longitudinal orientation, wherein each single undulation 2a of this undulating structure is inclined with respect to a resting plane of the cushioning member 1, so that each single undulation 2a forms an acute or obtuse angle with the above-mentioned resting plane.

To complete the structure of the cushioning member 1 there are furthermore provided a plurality of strips 3 connecting two or more bands 2 together and ensuring the stabilization of the entire cushioning member 1. The strips 3 are arranged so as to extend in an approximately transversal direction with respect to, i.e. across the bands 2, and may be such as to cover the full width extension of the plurality of bands 2, so that each strip 3 will actually join all bands 2 to each other, or each strip 3 may be such as to join two or more bands 2 to each other, so as to be able to obtain joining zones that are possibly offset from each other, according to the desired cushioning effect that has to be obtained.

According to an innovatory aspect of the present invention, the cushioning member in its complete and finished state and, therefore, as formed by said plurality of bands 2 connected together by the strips 3, is obtained as a single-piece moulding of a suitable thermoplastic material or by any other appropriate and equivalent forming method known as such in the art that is effective in enabling such member to be produced as a single-piece part. As a result, the bands 2 are made integral with the related connecting strips 3 and are directly formed into the final and definitive shape as required in view of the actual use which the cushioning member 1 is intended to, without any need arising for further processing steps to be provided successively in order to come to a finished product.

Through such contrivance, therefore, the possibility is given for the cushioning member 1 to be directly obtained in the most suitable shape and configuration thereof, in view of the various applications and uses which it may actually be intended for.

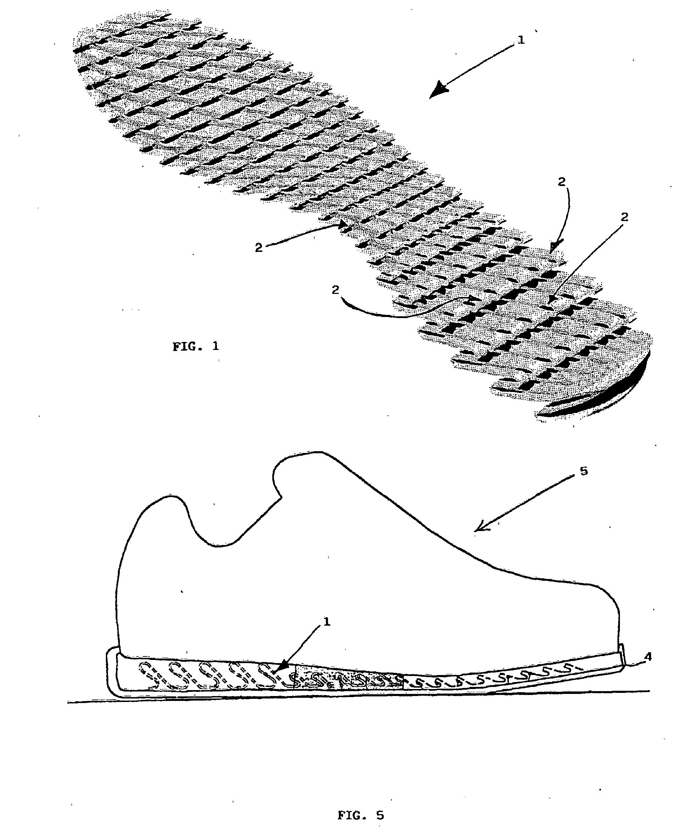

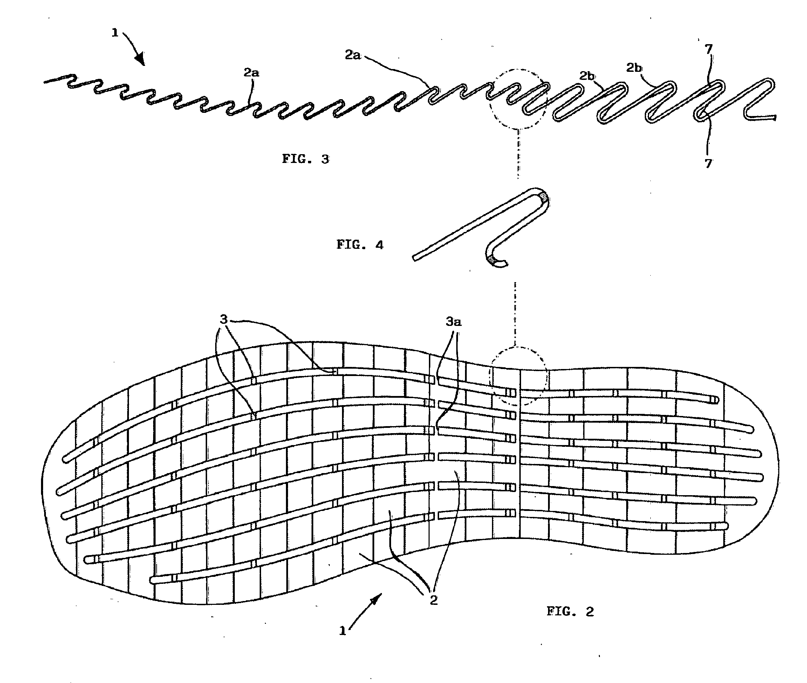

For example, the accompanying Figures 1 to 5 can be noticed to illustrate the configuration of a cushioning member 1 according to the present invention for application to a sole 4 of a footwear item 5. It may be readily noticed that, in this case, the bands 2 are such as to exactly replicate the shape of the sole 4, within which the cushioning member 1 itself is housed, while featuring an optimised orientation and shape pattern for the various resting zones to be supported elastically. The connecting strips 3 may be arranged below the lower surface of the bands 3 or, and possibly just at pre-determined zones, they may be provided so as to be co-planar with the bands 2, so as this is illustrated in the case of the strips 3a in Figure 2. Furthermore, the arms 3 and/or 3a may be given a differentiated shape and/or thickness pattern according to the cushioning effect that has desirably to be obtained at determined resting zones of the foot.

The cushioning member may advantageously be provided with a protective or covering layer, for instance of fabrics, leather or any other suitable material, which is preferably obtained by over-injecting the plastic material onto said protective layer. Even in this case, the moulded product is readily and directly obtained as a finished product ready for use in the intended application. For instance, with reference to Figures 1 to 5, the cushioning member 1 may be used as an insole insert within the footwear item 5, by having a suitable protective layer, eg. of such material as felt, leather or the like, duly associated on top and/or on the bottom of it through an over-injection process.

In view of obtaining a differentiated cushioning-effect pattern along the surface of the cushioning member 1, there are advantageously provided one or more undulations 2b that are reinforced by means of fins 7, which are again moulded integrally with the cushioning member 1, and which are provided at the site where the same undulations 2b undergo elastic deformation or bending, so as this is best illustrated in Figure 3. In this way, the support capacity of the cushioning member 1 at the so reinforced portions thereof turns out to be greater than at the other portions thereof, a greater load or force having to be applied thereon in order to bring about a same extent of deformation. Preferably, the fins 7 may be provided at the heel zone or portion of the cushioning member, upon which the heaviest load of the body is actually weighing, so that the reaction provided by the cushioning member 1 there must as a result be certainly greater than the one provided to the rest of the foot.

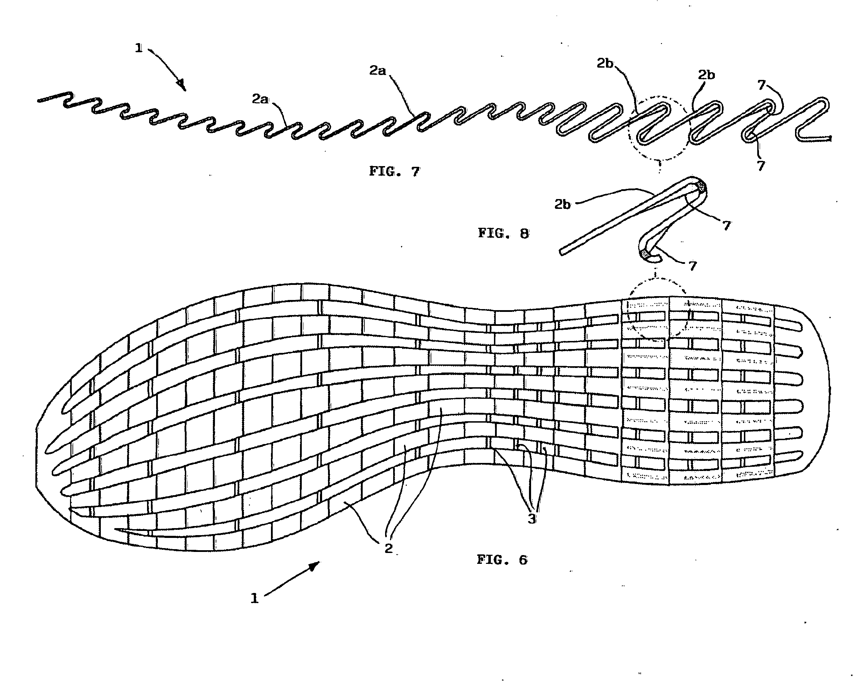

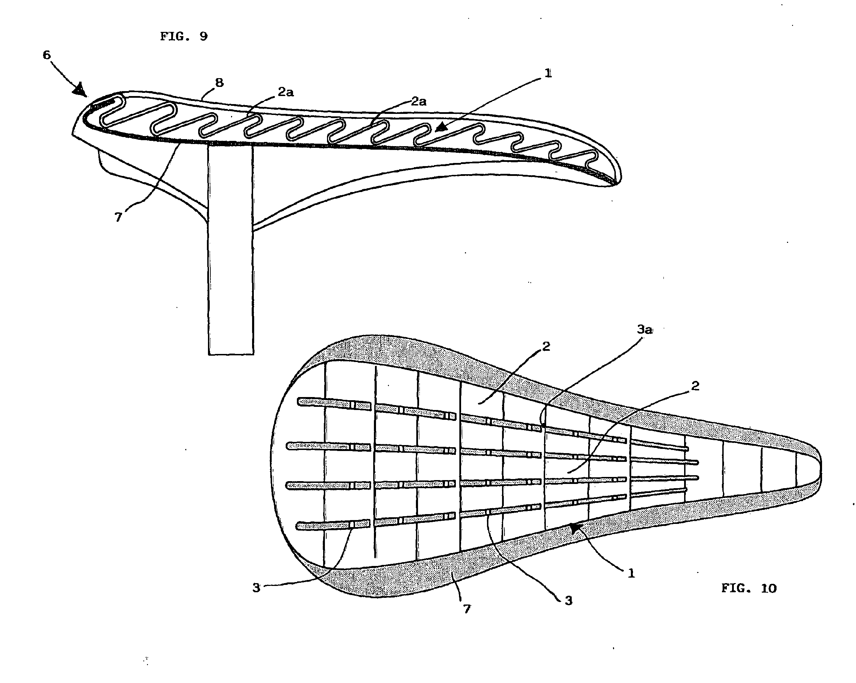

In Figures 6 to 8 there is illustrated a different embodiment of a cushioning member according to the present invention, as intended again for use in footwear applications, which can be noticed to feature a different shape and arrangement of both the bands 2 and the strips 3. In particular, the bands 2 feature a differentiated width according to the different resting zones or portions. Even in this case, there are advantageously provided undulations 2b that are reinforced by means of fins 7 provided integral with the cushioning member 1 and situated at the sites where the same undulations 2b undergo elastic deformation or bending, so as this is best illustrated in the detail shown in Figure 8.

Fully apparent from the above description is therefore the ability of the the present invention to effectively reach the afore cited aims and advantages by providing a cushioning member having an undulating, i.e. wavy conformation, which is particularly advantageous from both a functional and a manufacturing point of view.

As a matter of fact, the cushioning member according to the present invention can be most easily and rapidly obtained in its finished, ready-for-use form through a single manufacturing step, thereby allowing for greater productivity end efficiency under a sensible reduction in assembly costs and time as compared with prior-art solutions.

It should furthermore be specially noticed that the cushioning member according to the present invention proves particularly comfortable for the user, since, further to a cushioned support, it is also capable of providing aeration to the parts of the body that rest upon it. As a matter of fact, the alternating compression and subsequent recovery or spring-back motion of the cushioning member during its use brings about a kind of "pump effect" that favours the air circulation through the open structure of the cushioning member 1 itself, wherein the extent of aeration will of course depend also on the transpiration characteristics of the materials that are possibly used as a protective or cover layer on the same cushioning member 1.

In addition, the cushioning member 1 according to the present invention can be obtained, in a finished state within a single manufacturing step, in a number of different forms and shapes, thereby enabling the form that most suitably fits the various applications, which it may be intended to, to be defined with a wide degree of freedom.

So, for instance, Figures 9 and 10 can be noticed to illustrate the application of the cushioning member 1 according to the present invention to a bicycle seat 6, in which the cushioning member 1 is interposed between the base 7 of the seat 6 and the covering 8 thereof. In an advantageous manner, such covering of the seat may be provided with micro-perforations that would enable an optimum transpiration to take place therethrough, thereby favouring the air circulation within the seat itself.

For reasons of greater clarity, the same reference numerals are used in Figures 9 and 10, as well those Figures to which reference will be made further on, as the ones that are used in the preceding Figures 1 to 8 to indicate the various details and parts of the cushioning member.

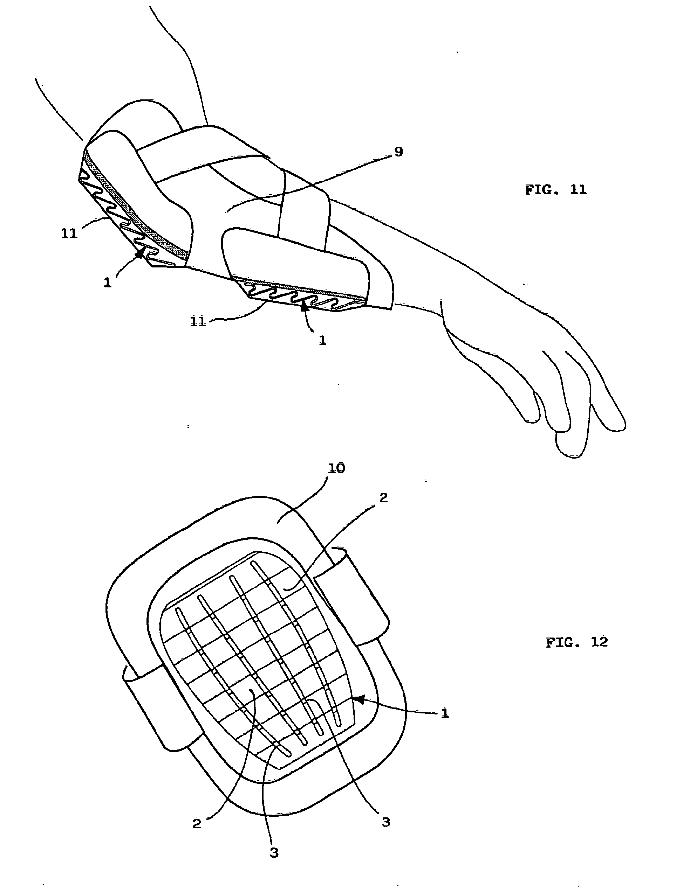

An example of application of the cushioning member 1 according to the present invention to a guard arrangement for protecting parts of the human body that are exposed to shocks or bumps, for instance when performing sports or physical activities, is illustrated in Figures 11 and 12. With particular reference to Figure 11, the cushioning member 1 is applied to an elbow guard 9, whereas Figure 12 illustrates the application thereof to a knee guard 10. The coverings 11 of the above mentioned guards can advantageously be produced through over-injection of the cushioning member 1, i.e. by injecting the cushioning member itself directly upon such coverings; in addition, they can also in this case be advantageously provided with micro-perforations to favour transpiration and air circulation.

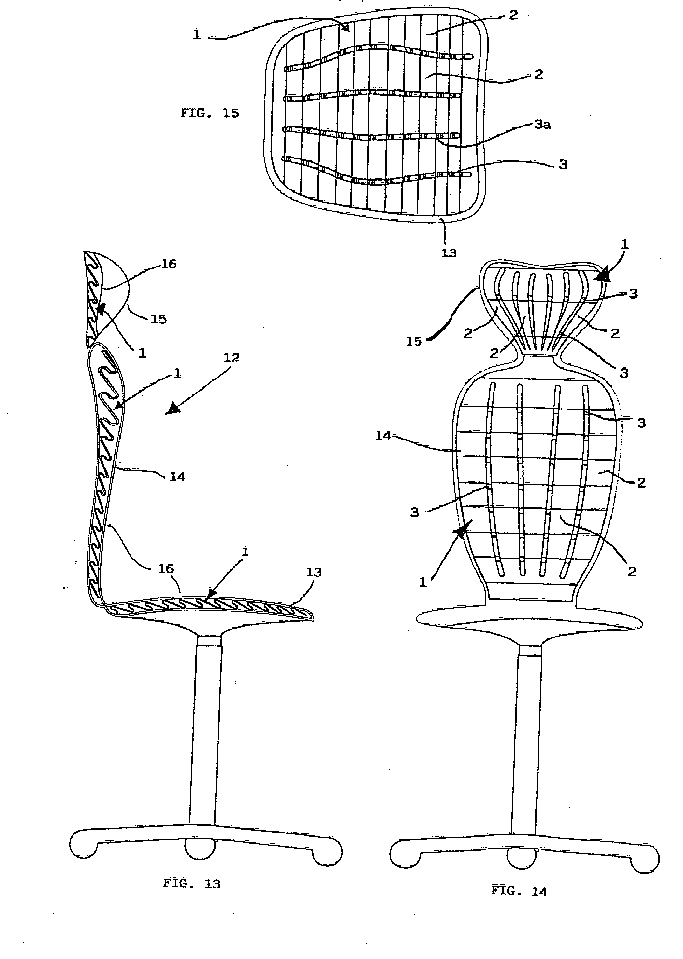

Figures 13 to 15 illustrate the application of the cushioning member 1 according to the present invention to one or more component parts of a chair 12, including the seat 13, the backrest 14, and the headrest 15. The methods used to produce the related coverings 16, as well as to enhance the transpiration and air-circulation capabilities thereof, are advantageously the same as or similar to the ones that have already been described in connection with the previously considered applications.

It will of course be appreciated that the cushioning member according to the present invention, as described above, may be subject to a number of modifications or may be embodied in a number of different manners without departing from the scope of the invention as defined by the appended claims.

So, for instance, by applying the same techniques and criteria as described above, it may be used in mattresses, pads or pillows of both the conventional or the orthopaedic type, in inflatable mattresses, pads and mats for leisure applications, in car or vehicle seats and related accessories, such as covers, linings and the like.

In addition, it should be noticed that the materials used, as well as the shapes and the sizing of the cushioning member of the invention may each time be selected so as to more appropriately meet the particular requirements or suit the particular application.

## Claims

1. Cushioning member with a wavy conformation comprising a plurality of elastically deformable bands (2) provided in a juxtaposed arrangement relative to each other according to a substantially longitudinal orientation, each such band (2) featuring a plurality of undulations (2a, 2b), which are inclined relative to a resting plane, and a plurality of joining strips (3, 3a) provided between two or more ones of said bands (2) and arranged roughly transversally relative to said bands, **characterized in that** said cushioning member (1) is produced as a single-piece moulding, in which said bands (2) are integral with said strips (3, 3a) and are assigned the final and definitive shape thereof, as required for the use which the cushioning member (1) is intended for.

2. Cushioning member according to claim 1, **characterized in tha**t it comprises one or more zones featuring differentiated elasticity.

3. Cushioning member according to claim 2, **characterized in that** said differentiated-elasticity zones are provided by means of differing cross-sections in said undulations (2a, 2b).

4. Cushioning member according to claim 2, wherein said differentiated-elasticity zones comprise one or more of said undulations (2b), each one of these being reinforced by means of at least a fin (7) that is obtained integrally with said cushioning member (1) at the portion where the respective undulation (2b) undergoes elastic deformation.

5. Cushioning member according to any of the preceding claims or combination thereof, **characterized in that** one or more of said joining strips (3, 3a) extend across the entire transversal extension of said plurality of bands (2) so as to connect all of said bands (2) making up said cushioning member (1) with each other.

6. Cushioning member according to any of the preceding claims or combination thereof, **characterized in that** one or more of said joining strips (3, 3a) extend partially across the transversal extension of said plurality of bands (2) so as to connect two or more bands (2) with each other.

7. Cushioning member according to claim 6, wherein said joining strips (3a, 3b) are arranged offset from each other.

8. Cushioning member according to any of the preceding claims or combination thereof, **characterized in that** it further comprises at least a protective or covering layer.

9. Cushioning member according to claim 8, obtained by over-injection onto said protective or covering layer.

10. Footwear item with a cushioned sole comprising a cushioning member (1) according to claim 1 obtained directly in the shape of said sole (4).

11. Footwear item according to claim 10, in which said differentiated-elasticity zones according to claim 2 are provided in correspondence of the heel portion of the foot.

12. Cushioned insole insert comprising a cushioning member according to claim 1 that is obtained directly in the shape of said insole insert.

13. Cushioned seat, in particular for two-wheeled or three-wheeled vehicles, comprising a cushioning member (1) according to claim 1 that is obtained essentially in the shape of said seat (6).

14. Protective arrangement comprising at least a cushioning member (1) according to claim 1 that is obtained directly in the shape of said protective arrangement (9, 10).

15. Chair or seat comprising at least a cushioning member (1) according to claim 1 that is obtained directly in the shape of one or more component parts (13, 14, 15) of said chair or seat (12) adapted to support one or more parts of a human body.

16. Mattress comprising at least a cushioning member according to claim 1.

17. Pillow comprising at least a cushioning member according to claim 1.

18. Inflatable mattress or pillow comprising at least a cushioning member according to claim 1.

## Patentansprüche

1. Dämpfungselement mit einer Wellenstruktur, die eine Vielzahl elastisch verformbarer Streifen (2) umfasst, die in einer im Wesentlichen längs verlaufenden Ausrichtung in zueinander benachbarter Anordnung vorhanden sind, wobei jeder derartige Streifen (2) eine Vielzahl von Wellenformen (2a, 2b), die relativ zu einer Ruheebene geneigt sind, sowie eine Vielzahl von Verbindungsstegen (3, 3a) aufweist, die zwischen zwei oder mehr der Streifen (2) vorhanden sind und relativ zu den Streifen annähernd quer angeordnet sind, **dadurch gekennzeichnet, dass** das Dämpfungselement (1) als einteiliger Formkörper hergestellt wird, in dem die Streifen (2) integral mit den Stegen (3, 3a) ausgebildet sind und ihnen die abschließende und definitive Form verliehen ist, wie sie für den Einsatzzweck erforderlich ist, für den das Dämpfungselement (1) bestimmt ist.

2. Dämpfungselement nach Anspruch 1, **dadurch gekennzeichnet, dass** es eine oder mehrere Zonen umfasst, die unterschiedliche Elastizität aufweisen.

3. Dämpfungselement nach Anspruch 2, **dadurch gekennzeichnet, dass** die Zonen unterschiedlicher Elastizität mittels verschiedener Querschnitte in den Wellenformen (2a, 2b) geschaffen werden.

4. Dämpfungselement nach Anspruch 2, wobei die Zonen unterschiedlicher Elastizität eine oder mehrere der Wellenformen (2b) umfassen und jede von diesen mittels wenigstens einer Rippe (7) verstärkt ist, die integral mit dem Dämpfungselement (1) an dem Abschnitt erzeugt wird, an dem die jeweilige Wellenform (2b) elastische Verformung erfährt.

5. Dämpfungselement nach einem der vorangehenden Ansprüche oder einer Kombination daraus, **dadurch gekennzeichnet, dass** sich einer oder mehrere der Verbindungsstege (3, 3a) so über die gesamte Querausdehnung der Vielzahl von Streifen (2) erstreckt/erstrecken, dass er/sie alle der Streifen (2) miteinander verbindet/verbinden, die das Dämpfungselement (2) bilden.

6. Dämpfungselement nach einem der vorangehenden Ansprüche oder einer Kombination daraus, **dadurch gekennzeichnet, dass** sich einer oder mehrere der Verbindungsstege (3, 3a) teilweise über die Querausdehnung der Vielzahl von Streifen (2) erstreckt/erstrecken und so zwei oder mehr Streifen (2) miteinander verbindet/verbinden.

7. Dämpfungselement nach Anspruch 6, wobei die Verbindungsstege (3a, 3b) zueinander versetzt angeordnet sind.

8. Dämpfungselement nach einem der vorangehenden Ansprüche oder einer Kombination daraus, **dadurch gekennzeichnet, dass** es des Weiteren wenigstens eine Schutz- oder Abdeckschicht umfasst.

9. Dämpfungselement nach Anspruch 8, das durch Überspritzen auf der Schutz- oder Abdeckschicht erzeug wird.

10. Fußbekleidungsartikel mit einer gedämpften Sohle, der ein Dämpfungselement (1) nach Anspruch 1 umfasst, das direkt in der Form der Sohle (4) erzeugt wird.

11. Fußbekleidungsartikel nach Anspruch 10, wobei die Zonen unterschiedlicher Elastizität nach Anspruch 2 an dem Fersenabschnitt des Fußes vorhanden sind.

12. Gedämpfte Brandsohleneinlage, die ein Dämpfungselement nach Anspruch 1 umfasst, das direkt in der Form der Brandsohleneinlage erzeugt wird.

13. Gedämpfter Sitz, insbesondere für Zweirad- oder Dreiradfahrzeuge, der ein Dämpfungselement (1) nach Anspruch 1 umfasst, das im Wesentlichen in der Form des Sitzes (6) erzeugt wird.

14. Schutzanordnung, die wenigstens ein Dämpfungselement (1) nach Anspruch 1 umfasst, das direkt in der Form der Schutzanordnung (9, 10) erzeugt wird.

15. Stuhl oder Sitz, der wenigstens ein Dämpfungselement (1) nach Anspruch 1 umfasst, das direkt in der Form eines oder mehrerer Einzelteile (13, 14, 15) des Stuhls oder Sitzes (12) erzeugt wird, das/die zum Tragen eines oder mehrerer Teile eines menschlichen Körpers eingerichtet ist/sind.

16. Matratze, die wenigstens ein Dämpfungselement nach Anspruch 1 umfasst.

17. Kissen, das wenigstens ein Dämpfungselement nach Anspruch 1 umfasst.

18. Aufblasbare Matratze oder aufblasbares Kissen, die/das wenigstens ein Dämpfungselement nach Anspruch 1 umfasst.

## Revendications

1. Elément amortisseur avec une structure ondulée comprenant une pluralité de bandes (2) élastiquement déformables disposées selon un agencement en juxtaposition les unes par rapport aux autres selon une orientation sensiblement longitudinale, chacune de ces bandes (2) comportant une pluralité d'ondulations (2a, 2b), qui sont inclinées par rapport à un plan de repos, et une pluralité de rubans de jonction (3, 3a) disposés entre deux ou plusieurs desdites bandes (2) et agencés à peu près transversalement par rapport aux dites bandes, **caractérisé en ce que** ledit élément amortisseur (1) est produit en une seule pièce moulée, dans laquelle lesdites bandes (2) sont en une seule pièce avec lesdits rubans (3, 3a) et définissent la forme finale et définitive de celui-ci, comme cela est requis par l'utilisation pour laquelle l'élément amortisseur (1) est prévu.

2. Elément amortisseur selon la revendication 1, **caractérisé en ce qu'**il comprend une ou plusieurs zones comportant des élasticités différentiées.

3. Elément amortisseur selon la revendication 2, **caractérisé en ce que** lesdites zones d'élasticité différentiées sont fournies au moyen de sections transversales différentes dans lesdites ondulations (2a, 2b).

4. Elément amortisseur selon la revendication 2, dans lequel lesdites zones d'élasticité différentiées comprennent une ou plusieurs desdites ondulations (2b), chacune de celles-ci étant renforcée au moyen d'au moins une ailette (7) qui est obtenue de manière intégrée audit élément amortisseur (1) au niveau de la portion où l'ondulation (2b) subit une déformation élastique.

5. Elément amortisseur selon l'une des revendications précédentes ou une combinaison de celles-ci, **caractérisé en ce qu'**un ou plusieurs desdits rubans (3, 3a) de jonction s'étend à travers 1 largeur transversale entière de ladite pluralité de bandes (2) de sorte à relier toutes lesdites bandes (2) composant ledit élément amortisseur (1) les unes avec les autres.

6. Elément amortisseur selon l'une des revendications précédentes ou une combinaison de celles-ci, **caractérisé en ce qu'**un ou plusieurs des rubans de jonction (3, 3a) s'étend partiellement à travers la largeur transversale de ladite pluralité de bandes (2) de sorte à relier deux ou plusieurs bandes (2) l'une avec l'autre.

7. Elément amortisseur selon la revendication 6, dans lequel lesdits rubans de jonction (3a, 3b) sont agencés de façon décalée les uns par rapport aux autres.

8. Elément amortisseur selon l'une des revendications précédentes ou une combinaison de celles-ci, **caractérisé en ce qu'**il comprend en outre au moins une couche de protection ou de recouvrement.

9. Elément amortisseur selon la revendication 8, obtenu par une sur-injection sur ladite couche de protection ou de recouvrement.

10. Article de chaussure avec une semelle amortie comprenant un élément amortisseur (1) selon la revendication 1 obtenu directement dans la forme de ladite semelle (4).

11. Article de chaussure selon la revendication 10, dans lequel lesdites zones d'élasticité différentiées selon la revendication 2 sont disposées en correspondance avec la partie de talon du pied.

12. Semelle rapportée amortie comprenant un élément amortisseur selon la revendication 1 qui est obtenu directement dans la forme de la dite semelle rapportée.

13. Siège amorti, en particulier pour des véhicules à deux ou trois roues, comprenant un élément amortisseur (1) selon la revendication 1 qui est essentiellement obtenu dans la forme dudit siège (6).

14. Dispositif de protection comprenant au moins un élément amortisseur (1) selon la revendication 1 qui est obtenu directement dans la forme dudit dispositif de protection (9, 10).

15. Chaise ou siège comprenant au moins un élément amortisseur (1) selon la revendication 1 qui est obtenu directement dans la forme d'une ou plusieurs parties (13, 14, 15) composant ledit siège ou ladite chaise (12) adaptées pour supporter une ou plusieurs parties du corps humain.

16. Matelas comprenant au moins un élément amortisseur selon la revendication 1.

17. Oreiller comprenant au moins un élément amortisseur selon la revendication 1.

18. Matelas ou oreiller gonflable comprenant au moins un élément amortisseur selon la revendication 1.
